# EUROPEAN PATENT SPECIFICATION

(11) **EP 0 570 149 B1**
(45) Date of publication and mention of the grant of the patent: **05.11.1997**
(21) Application number: 93303487.8
(22) Date of filing: 05.05.1993
(51) Int. Cl.: C08L 63/00, C08L 71/02, C08G 59/62, C08G 59/18, C08G 65/32, C08G 65/28

(54) **Method of preparing epoxy resin compositions**
Verfahren zur Herstellung von Epoxidharzzusammensetzungen
Procédé pour la préparation de compositions de résine époxyde

(30) Priority: 11.05.1992 US 880855
(43) Date of publication of application: 18.11.1993
(73) Proprietor: Huntsman Petrochemical Corporation, Salt Lake City, Utah 84108 (US)
(72) Inventor: Cscurida, Michael, Austin, Texas 78731 (US); Speranza, George Phillip, Austin, Texas 78757 (US); Sellstrom, Kathy Beth, Pflugerville, Texas 78660 (US)
(74) Representative: Goddar, Heinz J., Dr.

(56) References cited:
- EP-A- 0 256 658
- US-A- 3 654 370
- US-A- 4 373 034
- US-A- 4 521 572
- US-A- 4 940 770

## Description

This invention relates to a method of preparing an epoxy resin composition making use of a particular class of curing agents.

Epoxy resins constitute a broad class of polymeric materials having a wide range of physical properties. The resins have epoxide groups which are cured by reaction with certain catalysts (curing agents) to provide cured epoxy resin compositions with certain desirable properties.

The most common epoxy resins are condensation products of epichlorohydrin and Bisphenol A. These resins can be cured with conventional curing agents, such as polyamines, polycarboxylic acids, anhydrides and Lewis acids. Bisphenol A based epoxy compositions have good adhesive properties when cured, but many are inherently stiff and brittle, so that their use is limited to applications where peel forces are not significant.

It has been found that plasticizers can be added to an epoxy resin adhesive system to improve flexural strength. Typical methods of plasticization include the addition of flexibilizing aliphatic amines to the curing agent, addition of aminated or carboxylated rubbers to the system, addition of carboxy-terminated polyesters, addition of organic hydroxyl containing compounds, and the addition of epoxidized oils.

A process for preparing polyoxyalkylene polyamines is described in US-A-3654370. The amines act as curing agents for epoxy resins and have the formula: 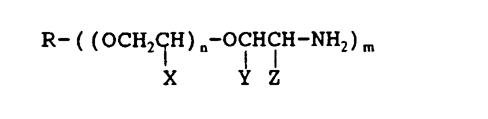 wherein R is the nucleus of an oxyalkylation susceptible polyhydric alcohol having 2 to 12 carbon atoms and 2 to 8 hydroxyl groups, Z is an alkyl group having 1 to 18 carbon atoms, X and Y are hydrogen or Z, n is 0 to 50 and m is 2 to 8, corresponding to the number of hydroxyl groups in the polyhydric alcohol. These amines are synthesized by means of a nickel, copper and chromium amination catalyst.

US-A-3236895 and US-A-3462393 describes a series of amine compounds which are solids or liquids and have particular utility, in curing epoxy resins. The amine compounds have the general formula: 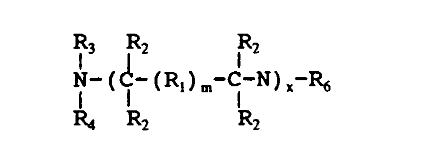 wherein the R groups are selectively defined as hydrogen, alkyl or alkylene oxide groups and x and m have defined ranges.

US-A-4316991 discloses modified polyols for use in preparing flexible urethane foams. A polyol initiator is reacted with one or more alkylene oxides and an epoxy resin in such a manner that the epoxy resin is added internally along the length of the polyol chain. The results is a modified polyol having a moleculer weight of 2,000 to 7,000. US-A-4373034 discloses the reaction of these modified polyols with polyisocyanate and a foam catalyst in the presence of a blowing agent to yield a flexible polyurethane foam.

US-A-4323658 discloses suitable modified polyols of lower molecular weight (200 to 1000) which can be used in preparing rigid isocyanate foams.

US-A-3299169 discloses an elastomeric epoxy resin. Epoxy resins are cured with a polyoxyalkyleneamine to yield these compositions.

The invention is concerned with the problem of providing epoxy resin compositions having useful properties.

The present invention provides a method of preparing an epoxy resin composition by reacting a vicinal polyepoxide having an epoxy equivalence of 1.8 or more with an amine-terminated curing agent. According to the invention, the curing agent is prepared by aminating a modified polyol produced by reaction of
i. a diol,
ii. one or more alkylene oxides, and
iii. an intermediate epoxy resin in proportions such that the ratio of equivalents of hydroxyl functionality to intermediate epoxy resin is at least 2 to 1, and in such a manner that the intermediate epoxy resin is added internally along the length of the polyol chain to give a modified polyol having a molecular weight of 2000 to 5000.

The resulting cured epoxy resin compositions have improved strength properties compared with epoxy resins cured with polyoxyalkyleneamines. Adhesion properties were significantly improved. The polyamine may be used to cure epoxy resins alone, or in admixture with co-curative polyamines, to produce adhesives and coatings.

The above-mentioned US-A-4316991 discloses a method of preparing the modified polyols used according to the invention.

The modified polyols may be made by reacting a diol initiator with one or more alkylene oxides to extend the diol chain, and adding epoxy resins in such a manner that the epoxy resin is added at selected points internally along the length of the diol chain. This increases the overall functionality of the chain. At least two equivalents of hydroxyl functionality should be present per equivalent of epoxy resin added to the reaction mixture, so as to avoid gelling of the epoxy by cross linking with itself. The epoxy resin may be added before, during and/or after the addition of alkylene oxide to the diol initiator. The best results are obtained if the resin is not added only as a "cap" that is, after all of the oxide has been added, which results in the resin being attached only to the end of the resulting polyol chain. One skilled in the art who is practising this invention may determine the best procedure with respect to when additions should be made, and at what temperature and during which times the reaction mixture is to be heated.

Polyether diols having equivalent weights of up to 750 are normally prepared in a one-step process by the reaction of propylene oxide with such an initiator. For the preparation of larger molecules, a two-step process is usually employed. In the first step, a product having an equivalent weight of 150 to 750 is prepared, and in the second step, this is reacted further with propylene oxide to prepare the higher moleculer weight product.

The alkylene oxides useful in this invention are ethylene oxide, propylene oxide and 1,2-butylene oxide. Ethylene oxide and propylene oxide are preferred for this invention, and these reactants are used in the Examples below. More than one alkylene oxide may be added to the reaction mixture, as deemed necessary by one skilled in the art practising this invention.

A wide variety of epoxy resins are useful in practising this invention. Both the epoxy resin intermediate used in the preparation of the curing agents, and the vicinal polyepoxide cured using that curing agent, are organic materials having an average of at least 1.8 reactive 1,2-epoxy groups per molecule. These polyepoxide materials can be monomeric or polymeric, saturated or unsaturated, aliphatic, cycloaliphatic, aromatic or heterocyclic, and may be substituted if desired with other substituents besides the epoxy groups, e.g., hydroxyl groups, ether groups, aromatic halogen atoms and the like. These vicinal polyepoxide containing compounds typically have an epoxy equivalent weight of 150 to 250. Preferably the base resin has an epoxy equivalent weight of 175 to 195, and is derived from condensing epichlorohydrin with 2,2-bis-(p-hydroxyphenyl propane) (Bisphenol A) to form 2,2-bis-[(p-2,3-epoxy propoxy)phenyl] propane.

Preferred polyepoxides are those of glycidyl ethers prepared by epoxidizing the corresponding allyl ethers or reacting, by known procedures, a molar excess of epichlorohydrin and an aromatic polyhydroxy compound, i.e., isopropylidene Bisphenol, novolac, resorcinol, etc. The epoxy derivatives of methylene or isopropylidene Bisphenols are especially preferred.

A widely used class of polyepoxides which are useful according to the present invention includes the resinous epoxy polyethers obtained by reacting an epihalohydrin, such as epichlorohydrin, with either a polyhydric phenol or a polyhydric alcohol. Typically the epoxy resins have an average of at least 1.8 reactive, 1,2-epoxy groups per molecule. An illustrative, but by no means exhaustive, listing of suitable dihydric phenols includes:
4,4'-isopropylidene Bisphenol,
2,4'-dihydroxydiphenylethylmethane,
3,3'-dihydroxydiphenyldiethylmethane,
3,4'-dihydroxydiphenylmethylpropylmethane,
2,3'-dihydroxydiphenylethylphenylmethane,
4,4'-dihydroxydiphenylpropylphenylmethane,
4,4-dihydroxydiphenylbutylphenylmethane,
2,2'-dihydroxydiphenylditolylmethane, and
4,4'-dihydroxydiphenyltolylmethylmethane.

Other polyhydric phenols which may also be co-reacted with an epihalohydrin to provide these epoxy polyethers are such compounds as resorcinol, hydroquinone, and substituted hydroquinones, e.g., methylhydroquinone.

Among the polyhydric alcohols which can be co-reacted with an epihalohydrin to provide these resinous epoxy polyethers are such compounds as ethylene glycol; propylene glycols; butylene glycols; pentane diols; bis-(4-hydroxycyclohexyl)dimethylmethane; 1,4-dimethylolbenzene; glycerol; 1,2,6-hexanetriol; trimethylolpropane; mannitol; sorbitol; erythritol; pentaerythritol; their dimers, trimers and higher polymers, e.g., polyethylene glycols, polypropylene glycols, triglycerol, or dipentaerythritol; polyallyl alcohol; and polyhydric thioethers, such as 2,2'-,3,3'-tetrahydroxydipropylsulphide; mercapto alcohols such as monothioglycerol, or dithioglycerol; polyhydric alcohol partial esters, such as monostearin or pentaerythritol monoacetate; and halogenated polyhydric alcohols such as the monochlorohydrins of glycerol, sorbitol or pentaerythritol.

Another class of polymeric polyepoxides which can be amine cured in accordance with the present invention includes the epoxy novolac resins obtained by reacting, preferably in the presence of a basic catalyst, e.g., sodium or potassium hydroxide, an epihalohydrin, such as epichlorohydrin, with the resinous condensate of an aldehyde, e.g., formaldehyde, and either a monohydric phenol, e.g., phenol itself, or a polyhydric phenol. Further details concerning the nature and preparation of these epoxy novolac resins can be obtained in Lee, H. and Neville, K., Handbook of Epoxy Resins, McGraw Hill Book Co., New York, 1967.

It will be appreciated by those skilled in the art that the polyepoxide compositions which are useful according to the practice of the present invention are not limited to those containing the above described polyepoxides, but that these polyepoxides are to be covered merely as being representative of the class of polyepoxides as a whole.

The reaction temperature and pressure may be selected by the skilled person to meet certain specifications required by the polyol for a particular use. US-A-4316991 discloses a pressure of about 445 kPa (50 psig) and a temperature of 50 to 150°C as representative conditions for making the modified polyols. The amount of epoxy resin to be added to the reaction mixture should be such that the epoxy equivalents present are less than half of the hydroxyl functionality equivalents present in the reaction mixture. Too many epoxy equivalents in relation to the hydroxy equivalents may cause the epoxy resin to gel by cross-linking with itself. As a result a large excess of hydroxyl equivalents may be used in the reaction mixture and still be within the spirit and scope of this invention. The modified polyol resulting from the method of this invention have a molecular weight in the range of 2000 to 5000.

US-A-3654370 discloses a method of preparing polyamines from the modified polyols. The modified polyol is treated with ammonia and hydrogen at a temperature of 150 to 275°C and a pressure of 3.5 to 34.5 MPa (35 to 340 atm.) over a catalyst prepared by the reduction of a mixture of oxides of nickel, copper and chromium, the proportion of metals to each other, calculated on an oxide free basis, being 60 to 85 mole % of nickel, 14 to 37 mole % of copper and 1 to 5 mole % of chromium. Raney nickel is also known as an amination catalyst.

The resulting polyamine can be used as the sole curing agent, or it may be used in admixture with conventional co-curing agents, for example, in a weight ratio of 5:1 to 1:5, preferably 2:1 to 1:2, polyamine to co-curing agent. The polyamine co-curing agents which can be utilized in accordance with the present invention are generally any of those polyamine curing agents which are well-known to be useful for the curing of vicinal epoxides. Generally, those curing agents having at least three reactive amino hydrogens are useful.

Exemplary of those amines which can be utilized in this way are alkylene polyamines, such as diethylene triamine, or triethylene tetramine; oxyalkylene polyamines such as polyoxypropylene diamines and triamines; and 1,13-diamino-4,7,10-trioxatridecane.

Aromatic amine curing agents are also useful, such as the alkylene-linked polyphenyl amines, phenylene diamines and polycyclic or fused aromatic primary amine compounds. The corresponding cycloaliphatic compounds can also be used.

Likewise, polyamide curing agents, such as the condensation products of polyamines and polycarboxylic acids are useful. Suitable amine compounds are, for example, the condensation product of a polyamine and a dimerized fatty acid produced in accordance with US-A-2379413.

Of the amine curing agents known to be effective in curing a vicinal epoxy resin, preferred curing agents for use in accordance with the present invention are the polyoxyalkylene containing amine compounds. A preferred class of polyoxyalkylene polyamines has the formula: 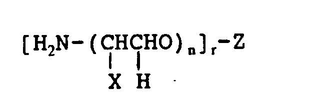 wherein X is hydrogen, methyl or an ethyl; Z is a hydrocarbon group having 2 to 5 carbon atoms and forming from 2 to 4 external ether linkages; n is 1 to 15 and r is 2 to 4. The most preferred polyoxyalkylene polyamines are the polyoxypropylene diamines wherein X is methyl, n is 1 to 10, Z is a 1,2-propylene group and r is 2. These polyoxyalkylene polyamines can be prepared by known methods as disclosed in US-A-3236895 and US-A-4654370. The most preferred polyoxyalkylene polyamine is a polyoxypropylene diamine having a molecular weight of about 230.

Another preferred class of polyoxyalkylene polyamines has the formula: 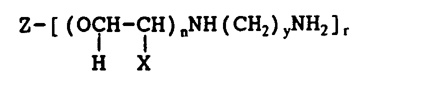 wherein X, Z, n and r are defined above and y is 2 or 3. These poly(aminoalkylamino)polyethers are the hydrogenated products of the cyanoalkylated adducts of a polyoxyalkylene polyamine as described. The preparation of the cyanalkylated adducts is described in US-A-3666788.

Examples of preferred alkanolamines useful in the invention include mono-, di- and triethanolamine, hydroxy ethoxyethylamine, N-aminoethylethanolamine, N,N-bis(hydroxypropyl) and N-hydroxyethylamine.

US-A-3654370 describes a process for preparing polyoxyalkylene polyamines of the formula: 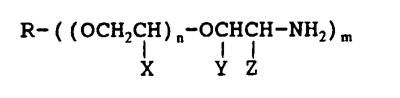 wherein R is the nucleus of an oxyalkylation susceptible polyhydric alcohol having 2 to 12 carbon atoms and 2 to 8 hydroxyl groups, Z is an alkyl group having 1 to 18 carbon atoms, X and Y are hydrogen or Z, n has an average value of 0 to 50 and m is 2 to 8 corresponding to the number of hydroxyl groups in the polyhydric alcohol.

Epoxy base resin, modified curing agent and optionally an accelerator are mixed immediately before use and applied directly to the surface to be coated before curing.

The curing agent is usually added to the formulation in stoichiometric quantities, i.e. in such an amount that there is one reactive NH group in the curing component for each epoxy group in the epoxy resin component. The stoichiometric quantity can be calculated from knowledge of the chemical structure and analytical data of the component.

For the purposes of the present invention, the stoichiometric amount of curing agent is calculated by adding together the number of equivalents on the basis of weight percent of replaceable NH groups. In general, it is advantageous to use up to 10% excess of the curing agent over the stoichiometric amount.

Stoichiometry unfortunately is not always calculatable. The order amount of curing agent to provide best properties may be determined empirically. One example of such a method is to measure the maximum exotherm temperature during the curing of the epoxy resin at different concentrations of curing agent. A graph of the exotherm temperature versus the concentration of curing agent exhibits a maximum at or near the stoichiometric quantity. Alternatively, the amount of curing agent to use is that quantity which maximizes a desirable physical property. Typically, the property maximized is either the glass transition temperature (Tg) or heat deflection temperature (HDT).

With many curing agents, curing may be accomplished at ambient conditions. For development of optimum achievable properties, however, curing at elevated temperature is necessary. The curing temperature range which will provide that results is, for instance, from 80 to 180°C for 1 to 10 hours. If the ultimate in physical properties is required of the composition, it may be cured at ambient temperature for about 3 hours, followed by an additional cure at elevated temperature (100 to 150°C) for a short period (0.5 to 4 h).

Optionally, the epoxy resin formulations according to the present invention can include an accelerator to speed the amine cure of the epoxy resin. In several applications, an accelerator is beneficial, especially when an epoxy resin is used as an adhesive in a flammable environment, thus making prolonged elevated temperature cure inconvenient or even hazardous.

US-A-3875072 describes an accelerator comprising piperazine and an alkanolamine in a weight ratio of 1:8 to 1:1. The accelerator is particularly suited for accelerating the cure of a polyglycidal ether of a polyhydric phenol by a polyoxyalkylenepolyamine.

The invention is illustrated by way of Example.

### Example 1A

A 200 molecular weight diol was prepared and modified by reaction with two weight percent of the diglycidal ether of Bisphenol-A.

A 40 litre reactor was charged with 4.54 kg (10 lbs.) of precatalyzed polypropylene 4 glycol (400 molecular weight, alkalinity mg KOH/g 19.1, hydroxyl No., calc. as mg KOH/g 265). The reactor was purged with prepurified nitrogen and heated to 100°C with continuing nitrogen purge. The initiator was dried to a water content of less than 0.15% using both vacuum and nitrogen stripping. 9.08 Kg (20 lb.) of propylene oxide was then reacted at 110 to 115°C at 445 kPa (50 psig). The reaction mixture was digested for two hours to an equilibrium pressure. 450 g (1 lb.) of the diglycidyl ether of Bisphenol A was then charged to the reactor and digested for 30 minutes. 9.08 Kg (20 lb.) of propylene oxide was then reacted at 110 to 115°C at 445 kPa (50 psig) and the reaction mixture was then purged for 15 minutes with nitrogen. The alkaline product was neutralized at 95°C by stirring for two hours with 620g of magnesol 30/40 absorbent, which was added as an aqueous slurry. The neutralized product was then vacuum-stripped to a minimum pressure, nitrogen-stripped, and filtered. Properties of the finished product were as follows:

| Properties | |
|---|---|
| Acid No., mg KOH/g | 0.019 |
| Hydroxyl No., mg KOH/g | 57.9 |
| Water, wt. % | 0.078 |

| Properties | |
|---|---|
| Unsaturation, meq/g | 0.052 |
| pH in 10:6 isopropanol-water | 7.5 |
| Color, Pt-Co | 100 |
| Sodium, ppm | 10.6 |
| Potassium, ppm | 0.5 |
| Viscosity, cs (10⁻⁶ m²/s) | |
| 25°C | 444 |
| 38°C | 221 |

### Example 1B - Reductive amination of the modified polyol

The polyol of Example 1A (450 g/h), ammonia (450 g/h) and hydrogen (24 Kg/h) were fed to a tubular reactor filled with 1250 cm³ of a nickel amination catalyst at 210°C and 0.5 kPa (4 mm Hg) for one hour. The finished product was recovered and had the following properties:

| | |
|---|---|
| Total acetylatables, meq/g | 1.06 |
| Total amine, meq/g | 1.03 |
| Primary amine, meq/g | 1.02 |
| Viscosity, 25°C, cs (10⁻⁶ m²/s) | 305 |

### Example 1C

Bisphenol A was cured with the polyamine of Example 1B.

| Formulation, (parts by weight) | A | B* |
|---|---|---|
| Liquid epoxy resin (EEW188) | 100 | 100 |
| Polyamine of Example 1B | 50 | 0 |
| Jeffamine® D-400 | 25 | 25 |
| Jeffamine® D-2000 | 0 | 50 |
| | | |
| Glass transition temperature | 30.7°C | 29.1°C |
| EEW - equivalent epoxy weight | | |

| | | |
|---|---|---|
| *Comparative | | |

| Properties of cured 3mm castings | | |
|---|---|---|
| Cured 2 h, 80°C, 3 h, 125°C | A | B* |
| Shore D hardness, 0-10 s | 75-66 | 74-60 |
| HDT, °C, 264 psi (1.82 MPa) load | 31.2 | 31.0 |
| Izod impact strength, ft-lb/in | 3.46 | 6.11 |
| Izod impact strength, (J/m) | 184.7 | 326.2 |
| Tensile strength, psi | 1700 | 1300 |
| Tensile strength, MPa | 11.77 | 8.96 |
| Tensile modulus, psi | 30000 | 30000 |
| Tensile modulus, MPa | 20.69 | 20.69 |
| Elongation at break, % | 101 | 100 |
| Flexural strength, psi | 900 | 680 |
| Flexural strength, MPa | 6.21 | 4.69 |
| Flexural modulus, psi | 36000 | 26000 |
| Flexural modulus, MPa | 248.2 | 179.3 |
| % wt. gain, 24-h water boil | 2.7 | 2.6 |
| 3-h acetone boil | 37.5 | 36.7 |
| Compression Strength, psi | 47000 | 35000 |
| Compression Strength, MPa | 324.1 | 241.3 |

| | | |
|---|---|---|
| *Comparative | | |

| Adhesion Properties | | |
|---|---|---|
| Cured 1 h 125°C | A | B* |
| Tensile shear strength, psi | 900 | 800 |
| Tensile shear strength, MPa | 6.21 | 5.52 |
| T-peel strength, pli | 29 | 18 |
| T-peel strength, N/m | 50.8 | 31.5 |

| | | |
|---|---|---|
| * Comparative | | |

Improvements were noted in strength properties (tensile, flexural and compression). Increase in modulus values and reduction in Izod impact strength indicate that a slightly less flexible cured epoxy product was produced with the experimental co-curing agent. For adhesion properties, tensile shear strength remained about the same but peel strength increased significantly.

### TABLE OF COMPOUNDS

JEFFAMINE® D-230, D-400 and D-2000 are represented by the structure:

H₂NCH(CH₃)CH₂-[OCH₂CH(CH₃)]ₓNH₂

wherein:

| JEFFAMINE® | x(approx.) |
|---|---|
| D-2000 | 33.1 |
| D-400 | 5.6 |
| D-230 | 2.6 |

| **TABLE OF TEST METHODS** | |
|---|---|
| Shore D-Hardness 0-10 s | ASTM D-2240 |
| Elongation at Break (%) | ASTM D-638 |
| Heat Deflection Temperature (HDT) (°C, 264 psi/66 psi, 1.82 MPa/0.46 MPa) | ASTM D-648 |
| Izod Impact Strength (ft. lbs./in; J/m) | ASTM D-256 |
| Tensile Strength (psi; MPa) | ASTM D-638 |
| Tensile Modulus (psi; MPa) | ASTM D-638 |
| Flexural Strength (psi; MPa) | ASTM D-790 |
| Flexural Modulus (psi; MPa) | ASTM D-790 |
| Compression Strength (psi; MPa) | ASTM D-695 |
| T-peel strength (pli; N/m) | ASTM D-1876 |
| Tensile shear strength (psi; MPa) | ASTM D-1002 |

## Claims

1. A method of preparing an epoxy resin composition by reacting a vicinal polyepoxide having an epoxy equivalence of 1.8 or more with an amine-terminated curing agent, characterised in that the curing agent is prepared by aminating a modified polyol produced by reaction of
i. a diol,
ii. one or more alkylene oxides, and
iii. an intermediate epoxy resin in proportions such that the ratio of equivalents of hydroxyl functionality to equivalents of epoxy in the intermediate epoxy resin is at least 2 to 1, and in such a manner that the intermediate epoxy resin is added internally along the length of the polyol chain to give a modified polyol having a molecular weight of 2000 to 5000.

2. A method according to Claim 1, characterised in that the diol is a polypropylene glycol.

3. A method according to Claim 1 or 2, characterised in that the alkylene oxides are selected from ethylene oxide, propylene oxide and butylene oxide.

4. A method according to any one of Claims 1 to 3, characterised in that the intermediate epoxy resin is selected from epoxy derivatives of bisphenol A, epoxy novolac resins and aliphatic epoxy resins.

5. A method according to any one of Claims 1 to 4, characterised in that the diol, alkylene oxide and intermediate epoxy resin are reacted at a temperature of 50 to 150°C.

6. A method according to any one of Claims 1 to 5, characterised in that the modified polyol is aminated using an amination catalyst comprising metals selected from nickel, copper, cobalt and Raney nickel, and oxides and mixtures thereof, at a temperature of 175 to 250°C and a pressure of 3.5 to 21 MPa (35 to 205 atm).

7. A method according to any one of Claims 1 to 6, characterised in that the intermediate epoxy resin comprises 1 to 5 wt. % of the modified polyol.

8. A method according to any one of Claims 1 to 7, characterised in that the curing agent additionally comprises a co-curing agent in a weight ratio of 5:1 to 1:5 amine-terminated curing agent to co-curing agent.

9. A method according to any one of Claims 1 to 8, characterised in that curing of the resin is carried out at 60 to 150°C for 1 to 60 hours.

## Patentansprüche

1. Ein Verfahren zur Herstellung einer Epoxidharzzusammensetzung durch Umsetzen eines vicinalen Polyepoxids mit einer Epoxid-Äquivalenz von 1,8 oder mehr mit einem Härtungsmittel mit Amin-Endgruppen, dadurch gekennzeichnet, daß das Härtungsmittel hergestellt wird durch Aminieren eines modifizierten Polyols, hergestellt durch Reaktion von
i. einem Diol,
ii. einem oder mehreren Alkylenoxiden und
iii. einem Zwischenstufen-Epoxidharz, in solchen Anteilen, daß das Verhältnis der Hydroxylfunktionalitäts-Äquivalente zu den Epoxid-Äquivalenten im Zwischenstufen-Epoxidharz wenigstens 2 zu 1 beträgt, und in solcher Weise, daß das Zwischenstufen-Epoxidharz intern entlang der Länge der Polyolkette hinzugefügt wird, um ein modifiziertes Polyol mit einem Molekulargewicht von 2000 bis 5000 zu ergeben.

2. Ein Verfahren nach Anspruch 1, dadurch gekennzeichnet, daß das Diol ein Polypropylenglykol ist.

3. Ein Verfahren nach Anspruch 1 oder 2, dadurch gekennzeichnet, daß die Alkylenoxide ausgewählt sind aus Ethylenoxid, Propylenoxid und Butylenoxid.

4. Ein Verfahren nach einem der Ansprüche 1 bis 3, dadurch gekennzeichnet, daß das Zwischenstufen-Epoxidharz ausgewählt ist aus Epoxid-Derivaten von Bisphenol A, Epoxid-Novolac-Harzen und aliphatischen Epoxidharzen.

5. Ein Verfahren nach einem der Ansprüche 1 bis 4, dadurch gekennzeichnet, daß das Diol, Alkylenoxid und Zwischenstufen-Epoxidharz bei einer Temperatur von 50 bis 150°C umgesetzt werden.

6. Ein Verfahren nach einem der Ansprüche 1 bis 5, dadurch gekennzeichnet, daß das modifizierte Polyol unter Verwendung eines Aminierungskatalysators aminiert wird, der Metalle umfaßt, die ausgewählt sind aus Nickel, Kupfer, Cobalt und Raney-Nickel, und Oxiden und Mischungen derselben, bei einer Temperatur von 175 bis 250°C und einem Druck von 3,5 bis 21 MPa (35 bis 205 atm).

7. Ein Verfahren nach einem der Ansprüche 1 bis 6, dadurch gekennzeichnet, daß das Zwischenstufen-Epoxidharz 1 bis 5 Gew.-% des modifizierten Polyols umfaßt.

8. Ein Verfahren nach einem der Ansprüche 1 bis 7, dadurch gekennzeichnet, daß das Härtungsmittel zusätzlich ein Co-Härtungsmittel in einem Gewichtsverhältnis von 5:1 bis 1:5 Härtungsmittel mit Amin-Endgruppen zu Co-Härtungsmittel umfaßt.

9. Ein Verfahren nach einem der Ansprüche 1 bis 8, dadurch gekennzeichnet, daß das Aushärten des Harzes durchgeführt wird bei 60 bis 150°C für 1 bis 60 Stunden.

## Revendications

1. Procédé de préparation d'une composition de résine époxyde consistant à faire réagir un polyépoxyde vicinal ayant une équivalence époxy de 1,8 ou plus avec un agent de durcissement à extrémité amine, caractérisé en ce que l'agent de durcissement est préparé en aminant un polyol modifié produit par la réaction de
i. un diol,
ii. un ou plusieurs oxydes d'alkylène, et
iii. une résine époxyde intermédiaire, dans des proportions telles que le rapport des équivalents de fonctionnalité hydroxyle aux équivalents d'époxy dans la résine époxyde intermédiaire soit d'au moins de 2 à 1, et de telle manière que la résine époxyde intermédiaire est ajoutée l'intérieur le long de la longueur de la chaîne du polyol pour donner un polyol modifié ayant un poids moléculaire de 2000 à 5000.

2. Procédé selon la revendication 1, caractérisé en ce que le diol est un polypropylèneglycol.

3. Procédé selon la revendication 1 ou 2, caractérisé en ce que les oxydes d'alkylène sont choisis parmi l'oxyde d'éthylène, l'oxyde de propylène et l'oxyde de butylène.

4. Procédé selon l'une quelconque des revendications 1 à 3, caractérisé en ce que la résine époxyde intermédiaire est choisie parmi les dérivés époxy de bisphénol A, les résines époxydes novolac et les résines époxydes aliphatiques.

5. Procédé selon l'une quelconque des revendications 1 à 4, caractérisé en ce qu'on fait réagir le diol, l'oxyde d'alkylène et la résine époxyde intermédiaire à une température de 50 à 150 °C.

6. Procédé selon l'une quelconque des revendications 1 à 5, caractérisé en ce que le polyol modifié est aminé en utilisant un catalyseur d'amination comprenant des métaux choisis parmi le nickel, le cuivre, le cobalt et le nickel de Raney, et des oxydes et mélanges de ceux-ci, à une température de 175 à 250 °C et une pression de 3,5 à 21 MPa (35 à 205 atm.).

7. Procédé selon l'une quelconque des revendications 1 à 6, caractérisé en ce que la résine époxyde intermédiaire représente 1 à 5 % en poids du polyol modifié.

8. Procédé selon l'une quelconque des revendications 1 à 7, caractérisé en ce que l'agent de durcissement comprend en plus un co-agent de durcissement dans un rapport pondéral de 5:1 à 1:5 de l'agent de durcissement à extrémité amine au co-agent de durcissement.

9. Procédé selon l'une quelconque des revendications 1 à 8, caractérisé en ce que le durcissement de la résine est effectué à 60 à 150 °C pendant 1 à 60 heures.
